Europäisches Patentamt

European Patent Office

Office européen des brevets

(19)

(11) Numéro de publication: **0 081 474**
A2

(12) # DEMANDE DE BREVET EUROPEEN

(21) Numéro de dépôt: **82870068.2**

(22) Date de dépôt: **19.11.82**

(51) Int. Cl.³: **C 02 F 1/14**

(30) Priorité: **07.12.81 BE 891387**
**20.08.82 BE 208846**

(43) Date de publication de la demande:
**15.06.83 Bulletin 83/24**

(84) Etats contractants désignés:
**DE FR GB IT NL**

(71) Demandeur: **Schumann, Marc**
**35 rue du 700ième Anniversaire**
**B-6760 Virton(BE)**

(72) Inventeur: **Schumann, Marc**
**35 rue du 700ième Anniversaire**
**B-6760 Virton(BE)**

(74) Mandataire: **Kellens, Georges E.**
**c/o BUGNION S.A. rue de Namur 43 -Bte 3**
**B-1000 Bruxelles(BE)**

(54) **Procédé de traitement par sublimation ou évaporation d'une matière, dispositif et installation pour sa mise en oeuvre.**

(57) Le procédé selon l'invention consiste à amener de la matière à traiter à passer par capillarité au travers d'une zone perméable et granuleuse, et matières solides que l'on retient alors que la matière liquide est évaporée et ensuite condensée. le dispositif pour la mise en oeuvre du procédé peut être utilisé plus particulièrement pour le dessablement de l'eau de mer et la régénération d'un sol.

Fig.1

- 1 -

Procédé de traitement par sublimation ou évaporation d'une matière, dispositif et installation pour sa mise en œuvre

La présente invention est relative à un traitement par sublimation d'une matière, mais plus particulièrement/d'un liquide l'évaporation comme de l'eau, eau de mer, eau douce, eau usée où l'on tente d'en éliminer ou encore en vue d'en récupérer au moins une partie des matières solides qu'elle peut contenir. De manière préférentielle, la source de chaleur prévue pour amener la matière à une température de sublimation ou d'évaporation, est le rayonnement solaire.

Dans une forme de réalisation possible de la mise en œuvre du procédé, on prévoit un dispositif qui pourra être utilisé pour le traitement de l'eau de mer en vue, principalement, de son dessalement ou de récupérer ou obtenir du sel, et, bien entendu pour les deux raisons conjointement.

Les buts de l'invention sont donc très variés et le procédé peut engendrer différents dispositifs et finalement une installation complète/et il s'agit d'une solution remarquable, une par exemple installation pour la régénération d'un sol comportant une pourcentage élevé de sel    ce qui le rend inculte ou encore de très faible valeur.

- 2 -

Le procédé selon l'invention se caractérise en ce que l'on amène la matière à traiter à passer par capillarité au travers d'une zone perméable et granuleuse, c'est-à-dire permettant une infiltration de la matière et zone terminée par un plan capteur de la chaleur qui forme au moins la partie inférieure inclinée d'une chambre ou zone de chauffe, plan tourné vers une source de chaleur, et partie de la matière sublimée ou évaporée ou encore vapeur que l'on condense dans au moins une chambre ou une zone de condensation, que l'on place en dehors de l'action directe de la source de chaleur, et chambre ou zone de condensation maintenue à une température inférieure à celle de la chambre ou zone de chauffe, et surplus éventuel de matière non évaporée que l'on amène par écoulement du ou des plans de sublimation ou d'évaporation vers un canal inférieur qui peut être atteint directement par la source de chaleur de sorte à poursuivre ou compléter au moins partiellement la sublimation ou l'évaporation de la matière et y récupérer les éléments solides.

Plus particulièrement l'invention est cependant relative à l'évaporation de liquides et le dispositif pour sa mise en œuvre sera décrit ci-après, dispositif ou ensemble de dispositifs qui, aménagés, vont permettre de réaliser une installation complète de traitement en vue d'obtenir de l'eau douce partiellement ou quasi totalement exempte de sels ou autres bactéries, eau douce qui va permettre de dessaler les terres attenantes et ainsi de suite en cycles successifs, régénérer complètement un sol.

Inversement, l'installation pourrait être conçue en vue d'obtenir ou récupérer par exemple du sel dans le cas du traitement de l'eau de mer, mais ou encore en vue de récupérer des parties solides résiduelles.

- 3 -

Afin de mieux comprendre l'invention, on la décrit maintenant par rapport à un dessin qui représente de manière
exemplative:

à la figure 1, une vue générale schématique en coupe dans
un dispositif pour la mise en œuvre du procédé selon l'invention;

à la figure 2, un plan schématique d'une installation de
dessalement d'eau de mer;

à la figure 3, une vue schématique en plan d'une installation
pour la régénération d'un sol;

à la figure 4, une vue en coupe suivant la ligne IV-IV de la
figure 3.

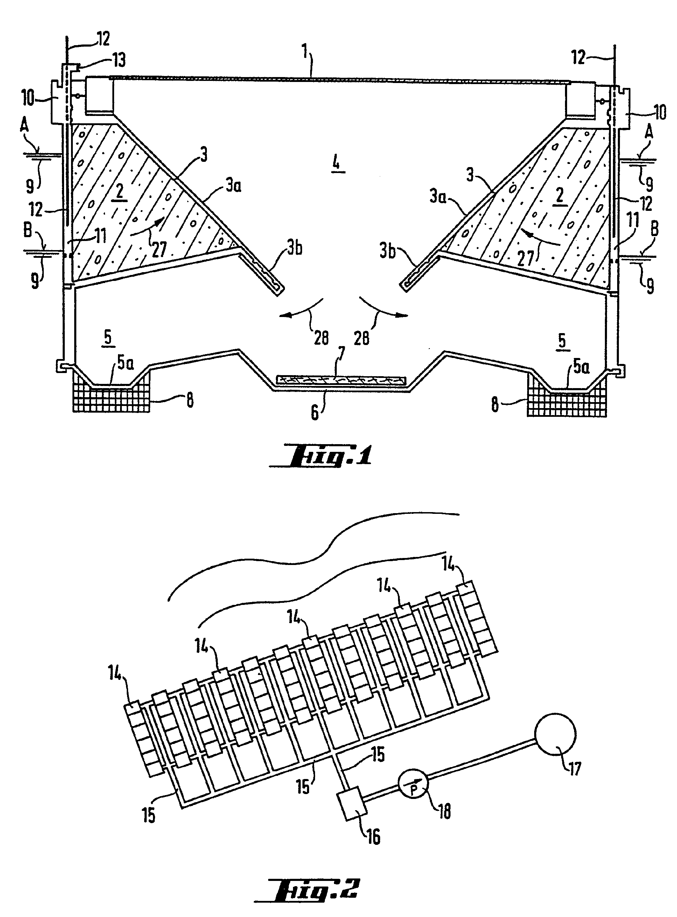

A la figure 1, on a représenté
par 1, une verrière, surface de chauffe, au travers de laquelle vont pouvoir passer les rayons solaires;

par 2, du béton cellulaire, type béton "Ytong", qui offre de
bonnes possibilités de capillarité, mais il pourrait s'agir de
toute matière poreuse et perméable et par exemple simplement du sable formant une masse capillaire;

par 3, les évaporateurs constitués généralement par une plaque
3a absorbante de la chaleur et donc par exemple une plaque
noire perforée ou en toute autre matière perméable et absorbante qui sur sa face extérieure va recueillir le sel, plaque 3a
à l'arrière de laquelle on va placer un filtre dans le cas où
la masse poreuse et perméable est du sable et cela pour l'empêcher d'entrer dans l'appareil car le béton cellulaire joue ce
rôle;

par 4, la chambre de chauffe qui est délimitée au-dessus par la
verrière 1 et latéralement par les évaporateurs 3 placés inclinés;

par 5, les deux chambres de condensation qui sont hors
d'atteinte de l'action des rayons solaires, chambres de con-

- 4 -

densation se terminant dans le bas par une pièce 5a en forme de bac qui va servir à recueillir l'eau traitée;
par 6, une partie centrale en forme de bac ou d'un canal dans lequel est généralement placé un filtre 7, ce canal va recueillir l'eau non évaporée qui pourrait éventuellement couler des évaporateurs 3 par exemple par suite d'une arrivée d'une trop grande quantité de liquide, ainsi que la matière solide qui pourrait affleurer sur la plaque d'évaporation 3a et tomber par gravité.

Comme parfaitement visible on prévoit de préférence que les évaporateurs 3 sont prolongés vers le bas par une partie 3b qui tendent à réaliser en quelque sorte un entonnoir au-dessus du canal 6. Comme le canal 6 se trouve directement sous l'action des rayons solaires, si le canal central 6 recueille de l'eau de ruissellement des évaporateurs 3, celle-ci pourra également par surchauffage s'évaporer et le filtre 7 permettra de recueillir un supplément de matière solide.

Afin d'obtenir l'effet de condensation, les chambres 5 doivent être maintenues à une température sensiblement inférieure à celle de la chambre de chauffe 4 avec laquelle elles communiquent; pour obtenir ce refroidissement, on prévoit qu'au moins une partie des parois des chambres 5 soit en contact par exemple avec l'eau d'arrivée 8, c'est-à-dire l'eau encore à traiter ou tout au moins une partie du sol 9 toujours fortement humidifiée d'eau qui à ce niveau n'aura donc pas atteint une température élevée.

Plus particulièrement si le dispositif est utilisé pour traiter l'eau de mer (comme représenté), en fonction des marées, l'eau va atteindre dans le sol 9, une hauteur A à marée haute, pour redescendre à une hauteur sensiblement inférieure B à marée basse; pour limiter l'entrée de l'eau attirée par capillarité au travers de la masse de béton cellulaire 2, on prévoit sur le cadre extérieur 10 du dispositif, une fente 11 dans laquelle on peut faire glisser de bas en haut une réglette 12 formant une paroi que l'on peut descendre de plus en plus en fonction du niveau de la montée de l'eau dans le sol 9. Ces réglettes 12 sont également destinées d'une manière plus générale, à régler le dispositif en fonction par exemple du plus ou moins grand effet de chauffe. Ces réglettes 12 vont même permettre d'arrêter complètement toute entrée d'eau par exemple la nuit, lorsque l'on désire sortir le filtre éventuel 7, nettoyer certaines pièces, récupérer la matière solide, etc... Ces réglettes 12 sont placées au-delà de la masse capillaire 2. De préférence comme représenté, la verrière est prévue (comme représentée) inclinée de manière à pouvoir plus facilement automatiquement ou non, nettoyer la face extérieure par un jet d'eau, tuyau 13, ce qui sera par exemple nécessaire pour un dispositif placé dans le sable d'une plage pour obtenir de l'eau dessalée; cela peut être le cas également pour un dispositif placé dans les terres.

Dans une forme préférentielle de réalisation, on prévoit une fente (non représentée) avec un entonnoir aux deux extrémités des appareils ou des rangées d'appareils, ainsi qu'un tambour également à chaque extrémité, de sorte à prévoir un filtre 7 en continue; un tambour déroulant le filtre 7 neuf (ou nettoyé), l'autre tambour enroulant le filtre 7 encrassé (à nettoyer) de sorte que l'on n'est pas obligé d'ouvrir le ou les appareils d'une rangée.

- 6 -

Bien que non représenté, on conçoit aisément que le dispositif comprend une sortie à une de ces extrémités des bacs de
condensation 5a recueillant l'eau traitée, que de préférence
également une sortie est prévue pour l'eau résiduelle recueillie
par le canal 6 et qui pourrait ne pas être évaporée.

Il est expréssément prévu de maintenir une entrée d'air dans
le dispositif afin de maintenir un courant d'air, afin d'éviter
une surchauffe mais également en vue de favoriser les échanges thermiques et créer les conditions nécessaires à l'obtention de la condensation après évaporation.

Le dispositif représenté à la figure 1 et qui vient d'être décrit
est plus particulièrement destiné, d'une part, au traitement
de l'eau de mer et en fonction, comme moyen de chauffage,
des rayons solaires; cependant on conçoit que le procédé peut
être utilisé dans d'autres buts et avec d'autres moyens de
rayonnement que les rayons du soleil et autre donc que la
chaleur solaire et/ou d'autres moyens de refroidissement que
l'eau encore à traiter, ce qui va entrainer certaines modifications du dispositif.  De même on peut prévoir de créer à
l'intérieur du dispositif une dépression qui peut favoriser
l'évaporation.

En se référant à la figure 2, on a représenté une installation
destinée au dessalement de l'eau de mer et qui est composée
d'un certain nombre de rangées de dispositifs 14 qui sont tels
que représentés à la figure 1, que l'on a reliés par un certain nombre de canalisations 15 branchées sur les sorties de
l'eau traitée, canalisations 15 qui conduisent par écoulement
naturel l'eau traitée en un réservoir de compensation 16 qui lui-même est relié à un réservoir de stockage 17. Pour permettre d'amener l'eau traitée dans ce réservoir de stockage 17, on interpose entre celui-ci et le réservoir de compensation, une pompe 18 du type par exemple pompe solaire, capteur héliothermique. On prévoit également de placer (non représenté) entre les deux réservoirs 16, 17, un système anti-retour de manière que, lorsque le dispositif est ralenti ou arrêté, il ne produise pas vidange de la pompe solaire ou capteur héliothermique.

En pratique seront seules visibles, les verrières et le réservoir de stockage, tous les autres éléments étant enfouis dans le sol. Bien entendu, on peut placer l'installation non pas en bordure de mer mais en retrait; il suffira de prévoir des tranchées recouvertes (voire des canalisations) d'amenées de l'eau de mer.

Il est particulièrement évident que des dispositions différentes pourront être prises; en fonction de la situation rencontrée, on peut en effet se trouver en milieu non pas sablonneux mais rocheux.

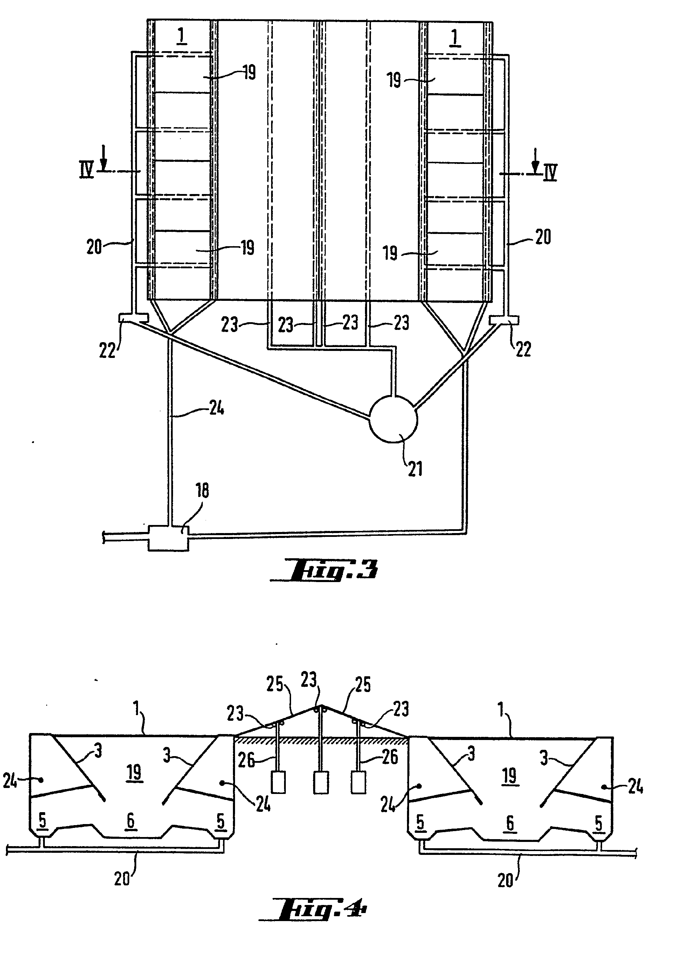

En se référant aux figures 3 et 4, on se sert de rangées de dispositifs 19 du type tel que représenté à la figure 1 et décrit ci-dessus pour régénérer un sol comportant un trop fort pourcentage de sel; dans ce cas il s'agit bien entendu d'obtenir le cycle suivant : le sol à traiter est aspergé d'eau qui se charge de sel et devient l'eau à traiter par les dispositifs 19; ensuite après en avoir extrait le sel, on renvoie l'eau douce dans le sol et l'on peut créer un nouveau cycle ou simplement ensuite, le sol étant suffisamment régénéré,

- 8 -

on amène de l'eau de mer ou autre et après traitement,
on se sert de l'eau traitée pour asperger le sol régénéré.

Aux figures 3 et 4 on a encore représenté par 20 les canalisations récupérant l'eau traitée que l'on mène vers une cuve de stockage 21 par l'intermédiaire de capteurs héliothermiques 22, l'eau traitée stockée pouvant ensuite être envoyée dans le sol à régénérer par les canalisations 23 car il peut s'agir finalement que d'un simple arrosage dès lors que le sol serait complètement régénéré, une canalisation 24 étant prévue pour amener l'eau du premier cycle au dispositif 19, soit directement par exemple d'eau salée ou à traiter à ce même dispositif 19.

En se référant à ces figures 3 et 4, on voit que l'on prévoit de placer des rangées de dispositifs 19 à une certaine distance l'une de l'autre (les unes des autres) et par exemple de 10 mètres, pour éviter l'évaporation quasi immédiate de l'eau de traitement du sol (ou d'arrosage), de préférence, on va recouvrir le sol à traiter à une certaine hauteur par des écrans, simples tôles 25 posés sur une armature 26 partiellement plantée dans le sol.

Dans le cas (non représenté) où un dispositif ou série de dispositifs sont prévus pour traiter des eaux usées (par exemple l'eau industrielle), le dessablement partiel ou total pour récupérer ou non certaines matières solides, il n'est pas nécessaire d'enfouir le dispositif dans le sol mais simplement de le plonger partiellement dans un bassin contenant les eaux (ou autres liquides) à traiter.

- 9 -

L'invention n'est donc pas limitée aux procédé, dispositif et installation décrits qui pourront nécessiter des adaptations différentes en fonction du but et de la matière traitée.

Le fonctionnement du dispositif (voir figure 1) est particulièrement simple, l'eau (ou toute autre liquide) se trouvant dans le sol, le sable de la plage ou même dans un grand récipient (par exemple pour le traitement d'eau usée), va monter par capillarité dans l'élément perméable et granuleux dans lequel il se trouve par exemple le sol, ou encore l'élément complémentaire qu'on a créé, par exemple la masse de béton capillaire (selon la flèche 27, figure 1); le liquide s'infiltre dans cette masse, passe par les évaporateurs surchauffés, s'évapore donc instantanément. Cette vapeur, grâce au mouvement d'air, va atteindre les parties inférieures et les chambres de condensation (figure 1, flèche 28).

Dans sa forme même, le dispositif tel que représenté à la figure 1, est particulièrement variable et par exemple de forme carré, rectangulaire, de hauteur proportionnellement plus élevée ou non; on peut le concevoir simplement à un seul évaporateur latéral et incliné et aussi pourvu d'une seule chambre de condensation mais tout ceci ne vient en rien modifier le principe défini de l'invention et reste dans le cadre des revendications qui vont suivre.

Accessoirement à une installation conforme à l'invention, on peut prévoir de créer un bassin de compensation des eaux à traiter, de manière à maintenir une hauteur constante à l'arrivée des eaux à traiter.

- 10 -

Si les eaux traitées sont prévues pour la consommation humaine ou animale, pour la rendre plus aisément assimilable, on peut créer une chute d'eau dans le réservoir de stockage de sorte à oxygéner l'eau douce récupérée.

Par ailleurs, par exemple pour augmenter l'intensité des rayons, on peut parfaitement prévoir de concentrer les rayons solaires et ce afin d'obtenir une augmentation des possibilités de chauffe.

0081474

- 11 -

Revendications

1. Procédé de traitement par sublimation d'une matière,
mais plus particulièrement/d'un liquide comme de l'eau, eau
*l'évaporation*
de mer, eau douce, eau usée où l'on tente d'en éliminer ou
ou encore en vue d'en récupérer au moins une partie des
matières solides qu'elle peut contenir, telles que sels, bactéries, résidus et/ou autres particules solides, caractérisé en
ce que l'on amène la matière à traiter à passer par capillarité au travers d'une zone perméable/,c'est-à-dire permettant
*et granuleuse*
une infiltration de la matière et zone terminée par un plan
capteur de la chaleur qui forme au moins la partie inférieure
inclinée d'une chambre ou zone de chauffe, plan tourné vers
une source de chaleur, et partie de la matière sublimée ou
évaporée ou encore vapeur que l'on condense dans au moins
une chambre ou une zone de condensation, que l'on place en
dehors de l'action directe de la source de chaleur, et chambre
ou zone de condensation maintenue à une température inférieure
à celle de la chambre ou zone de chauffe, et surplus éventuel
de matière non évaporée que l'on amène par écoulement du
ou des plans de sublimation ou d'évaporation vers un canal inférieur qui peut être atteint directement par la source de chaleur de sorte à poursuivre ou compléter au moins partiellement la sublimation ou l'évaporation de la matière et y récupérer les éléments solides.

2. Procédé selon la revendication 1, caractérisé en ce que
l'on maintient une température à la ou les chambres ou zones
de condensation, inférieure à celle de la chambre ou zone de
chauffe en les plaçant en contact, c'est-à-dire en les entourant
partiellement par un liquide de refroidissement qui peut être
le liquide encore à traiter, de sorte à créer un échange thermique.

- 12 -

3. Procédé selon l'une quelconque des revendications 1 et 2, pour la régénération du sol, caractérisé en ce que le liquide à traiter au début du premier cycle est obtenu par un liquide qu'on injecte de l'extérieur dans le sol afin d'obtenir dans celui-ci du liquide à traiter et qu'ensuite on réinjecte le liquide traité dans le sol pour poursuivre la régénération du sol ou simplement l'arroser.

4. Procédé selon l'une quelconque des revendications 1 à 3, caractérisé en ce que les moyens de chauffe sont les rayons solaires concentrés ou non.

5. Dispositif pour la mise en œuvre du procédé selon l'une quelconque des revendications 1 à 4, caractérisé en ce qu'il comporte au moins une zone ou chambre de chauffe (4) constituée en ce qui concerne sa partie supérieure par une plaque en verre, verrière (1), formant surface de passage du rayonnement ou surface de chauffe, et partie supérieure horizontale légèrement inclinée ou non (1) complétée latéralement sur au moins une partie de sa hauteur par une masse perméable / et granuleuse (2) dont au moins la surface (3) en regard de la chambre ou zone de chauffe (1) est une matière absorbante de la chaleur et forme au moins la partie essentielle de la surface d'évaporation (3) et surface ou surfaces placées plus ou moins inclinées de haut en bas, de l'extérieur vers l'intérieur et par lesquelles peut entrer le liquide, et dispositif qui à sa partie inférieure est constitué par une ou plusieurs chambres ou zones de condensation (5) placées extérieurement à la surface de passage du rayonnement ou tout au moins sont prévues hors de l'atteinte des rayons traversant la surface de passage du rayonnement ou surface de chauffe et chambres ou zones de condensation (5) comportant à une extrémité au moins une

- 13 -

sortie du liquide traité et en outre dans le prolongement vers le bas de la ou les surfaces d'évaporation, un ou des canaux ou zones (6) pour l'écoulement du surplus de liquide non évaporé et de récupération éventuelle des éléments solides, canaux ou zones formant surface d'évaporation complémentaire pouvant être atteinte directement par les rayons traversant la surface de passage du rayonnement ou surface de chauffe.

6. Dispositif selon la revendication 5, caractérisé en ce que la zone d'évaporation (3) comporte un moyen de réglage du débit de l'entrée du liquide par capillarité.

7. Dispositif selon la revendication 6, caractérisé en ce que ce moyen de réglage du débit d'entrée du liquide est une réglette (12) formant paroi pouvant être relevée plus ou moins haut et placée à l'arrière de la masse capillaire (2).

8. Dispositif selon l'une quelconque des revendications 5 à 7, caractérisé en ce que le canal ou la zone d'évaporation (6) comporte un filtre (7).

9. Dispositif selon l'une quelconque des revendications 5 à 8, caractérisé en ce qu'un filtre est placé entre la masse capillaire (2) et l'évaporateur (3).

10. Dispositif selon l'une quelconque des revendications 5 à 9, caractérisé en ce que la ou les chambres de condensation (5) sont au moins partiellement entourées par le liquide à traiter, le dispositif étant placé dans le liquide à traiter ou un canal d'amenée du liquide à traiter.

11. Dispositif selon l'une quelconque des revendications 5 à 9, caractérisé en ce qu'au moins les surfaces d'évaporation (3) sont placées sur une matière capillaire formant masse (2) par où peut passer le liquide à traiter.

12. Dispositif selon l'une quelconque des revendications 5 à 11, caractérisé en ce que les différents filtres sont amovibles.

13. Dispositif selon l'une quelconque des revendications 1 à 12, caractérisé en ce que le filtre (7) du canal d'évaporation (6) est continu  et entre par une extrémité d'un dispositif ou d'une rangée de dispositifs, pour ressortir à l'autre extrémité du dispositif ou de la rangée de dispositifs.

14. Installation de traitement d'un liquide en particulier de l'eau (figure 2) et comportant un ou  des dispositifs selon l'une quelconque des revendications 5 à 13, caractérisée en ce que le dispositif ou les dispositifs (14) sont placés dans des tranchées creusées dans le sol, les surfaces de chauffe affleurant le sol et qu'une liaison est créée entre ces tranchées et la source de liquide à traiter qui est constituée par des canalisations secondaires (15) complétées ou non par un réservoir de compensation (16) et que le liquide traité récupéré dans les chambres de condensation est amené par écoulement naturel au thermosiphon vers une aire de stockage (17).

15. Installation pour la régénération du sol (figures 3 et 4), caractérisée en ce qu'elle comporte au moins deux rangées de dispositifs (19) selon l'une quelconque des revendications

- 15 -

5 à 13, espacées l'une de l'autre, une cuve de stockage (21) vers laquelle l'eau traitée est amenée par des capteurs héliothermiques(22), cette eau pouvant être envoyée par des canalisations (23) vers le sol à régénérer, pour poursuivre sa régénération ou plus simplement ensuite son arrosage, une canalisation (24) amenant l'eau (salée, usée, etc...) aux différents dispositifs (19).

**Fig. 1**

**Fig. 2**

**Fig. 3**

**Fig. 4**